# EUROPÄISCHE PATENTANMELDUNG

(11) **EP 4 094 573 A1**
(43) Veröffentlichungstag der Anmeldung: **30.11.2022**
(21) Anmeldenummer: 22020239.4
(22) Anmeldetag: 26.05.2022
(51) Int. Cl.: A01J 7/04

(54) **EUTERZITZENSPRÜHANLAGE UND DAMIT ERGÄNZTE MELKSTANDSANLAGE FÜR MILCHGEBENDE NUTZTIERE**

(30) Priorität: 26.05.2021 DE 102021002724
(71) Anmelder: Keller, Michael, 67657 Kaiserslautern (DE)
(72) Erfinder: Keller, Michael, 67657 Kaiserslautern (DE)
(74) Vertreter: Klein, Friedrich Jürgen

(57) **Zusammenfassung**

Um mit geringem technischen Aufwand aber trotzdem funktionssicher eine Euterzitzensprühanlage (8) zur automatisierten berührungslosen Aufbringung einer Flüssigkeit, insbesondere einer Behandlungsflüssigkeit, auf zumindest eine Euterzitze eines milchgebenden Tieres, bereits zu stellen, das sich auf einem Melkplatz (2) eines Mehrfachmelkstands befindet, wobei die Euterzitzensprühanlage mit zumindest einem eine Düse (9) umfassenden Ausstoßmittel versehen ist, mit welchen die Flüssigkeit gerichtet ausgestoßen wird, und die Zitzensprühanlage ferner mit einer Steuerung, zum Auslösen eines Flüssigkeitsaustoßes, versehen ist, wird eine Pumpeinrichtung (6) zur Erzeugung eines im Bereich der Düse wirksamen Ausstoßdrucks in der Flüssigkeit vorgeschlagen, bei der die zumindest eine Düse während des durch eine Steuerung ausgelösten Sprühvorgang außerhalb des Melkplatzes angeordnet ist, in welchen die Düse für den Ausstoß gerichtet ist.

## Beschreibung

Die Erfindung betrifft eine Euterzitzensprühanlage gemäß des Oberbegriffs von Patentanspruch 1.

Milchgebende Nutztiere, insbesondere Milchkühe, werden regelmäßig gemolken. In der landwirtschaftlichen Nutztierhaltung findet dies üblicherweise in mehr oder weniger automatisierten Melkanlagen statt. Hierbei müssen die Tiere an einen Melkplatz gebracht werden, wo ihnen an ihrem Euter ein Melkgeschirr angebracht wird. Um eine möglichst effiziente Melkung auch einer großen Anzahl an Milchkühen eines Landwirtschaftsbetriebs durchführen zu können, sind Melkanlagen mit einer Vielzahl an Melkplätzen üblich geworden, in denen mehrere Nutztiere gleichzeitig gemolken werden können. Beispiele hierfür sind in einer nicht abschliessenden Aufzählung Karussell-, Reihenmelkstände (Side by side) oder auch Fischgrätmelkstände. Diese unterschiedlichen Melkstände unterscheiden sich im wesentlichen durch die geometrische Anordnung der einzelnen Melkplätze zueinander. Außer für Milchkühe sind auch bereits solche Melkstände für Ziegen bekannt geworden. Die vorliegende Erfindung richtet sich sowohl an automatisierte Melkstände für Kühe als auch an automatisierte Melkstände für Ziegen oder Schafe.

Am jeweiligen Melkplatz wird über jede Zitze des milchgebenden Nutztiers ein Zitzenbecher der Melkmaschine übergestülpt und anschließend im Zitzenbecher mittels pulsierendem Melkvakuum eine Melkbewegung erzeugt, welche zum Melkvorgang führt. Nach Beendigung des Melkvorgangs werden die Zitzenbecher des Melkgeschirrs vom Euter abgenommen. Die üblicherweise nicht hygienische Umgebung der Weide und/oder des Stalls, in welchem sich die Tiere aufhalten, wenn sie sich nicht im Melkstand befinden, sowie die regelmäßige häufige mechanische Belastung der Zitzen durch die Melkmaschine können zu Reizungen und Entzündungen der Zitzen führen. Die Tiere können als Folge nicht oder nur unter schwierigen Umständen gemolken und die Milch kann dadurch unbrauchbar werden. Auch kann als Folge davon die Gabe von Medikamenten erforderlich werden, wodurch die Milch des Tieres mit Medikamentenrückständen belastet werden kann.

Um dem entgegenzuwirken ist es üblich geworden, die Zitzen nach Abnahme des Melkgeschirrs vom Euter mit einem geeigneten Mittel zu pflegen, insbesondere mit einem flüssigen Pflegemittel. Diese Behandlung wird als "Dippen" bezeichnet. Damit trotz dieser pflegenden Behandlung die Verweilzeiten des jeweiligen Nutztiers, insbesondere einer Milchkuh, im Melkstand möglichst kurz bleiben und damit der Melkstand möglichst wirtschaftlich genutzt werden kann, sind bereits automatisierte Euterzitzensprühanlagen für ein Aufbringen eines Dipp- bzw. Pflegemittels nach einem Melkvorgang bekannt geworden. Bei einer unter der Bezeichnung Boumatic SR2 vorbekannten solchen Anlage handelt es sich um einen Karussellmelkstand, bei dem auf einem sich drehenden kreisförmigen Karussell eine Vielzahl an Melkständen angeordnet sind. An einer Stelle des Umfangs der Karussells ist hier ein entlang eines Kreisbogenabschnitts automatisiert und angetrieben verfahrbarer Roboter angeordnet, der mit einer im wesentlichen radial in einen Melkstand hineinschiebbaren und wieder rückziebaren Lanze versehen ist. An ihrem Ende ist die Lanze mit einem Sprühauslass versehen. Durch die Verfahrbarkeit des Roboters entlang eines Umfangsabschnitts des Karussels, der radialen Verfahrbarkeit der Lanz, sowie einer zusätzlichen Höhenverstellbarkeit der Lanze kann der Sprühauslass in den Melkplatz unter das Euter und zwischen die Hinterläufe einer sich in einem der drehenden Melkstände des Karussels befindlichen Milchkuh gebracht, das Euter mit einem Nachdippmittel besprüht und wieder zurückgezogen werden. An dieser Lösung kann als nachteilig empfunden werden, daß ein hoher Aufwand für die dreiachsige Beweglichkeit des Roboters erforderlich ist, um eine Bewegung der an der Lanze angeordneten Düse in den Melkstand hinein unter das Euter zu ermöglichen. Da die Lanze zwischen die Hinterläufe des Nutztiers verfahren wird, kann vermutet werden, daß bei dieser vorbekannten Lösung auch ein technischer Aufwand vorgenommen ist, um eine Verletzung des Nutztiers bei der Bewegung der Düse in den Melkstand hinein zu vermeiden.

Der Erfindung liegt deshalb die Aufgabe zugrunde, eine Euterzitzensprühanlage (Dippanlage) der eingangs genannten Art zu schaffen, die trotz eines vergleichsweise geringen technischen Aufwands eine zuverlässige Dippbehandlung der Euter von Nutztieren im Melkstand am jeweiligen Melkplatz ermöglicht.

Diese Aufgabe wird bei einer Euterzitzensprühanlage der eingangs genannten Art erfindungsgemäß durch eine Pumpeinrichtung zur Erzeugung eines im Bereich der Düse wirksamen Ausstoßdrucks in der Flüssigkeit, sowie dadurch gelöst, daß die zumindest eine Düse während des durch eine Steuerung ausgelösten Sprühvorgangs außerhalb des Melkplatzes angeordnet ist, in welchen die Düse für den Ausstoß gerichtet ist. Die Aufgabe wird zudem durch eine Melkstandsanlage nach den Ansprüchen 8 und 9 sowie durch ein Verfahren gemäß den Ansprüchen 10 und 11 gelöst.

Wie es sich gezeigt hat, kann mit dieser erfindungsgemäßen Lösung, die einen deutlich geringeren Aufwand als vorbekannt, mit sich bringt, eine funktionssichere Nachdipppbehandlung im Sinne einer pflegenden (nicht medizinischen) Behandlung von milchgebenden Nutztieren vorgenommen werden, ohne daß hierfür eine motorisch angetriebene Bewegung eines Sprühauslaßes in den Melkplatz hinein erforderlich ist. Es ist im Zusammenhang mit der Erfindung hierfür erst recht kein verfahrbarer Roboter erforderlich. Da die zumindest eine Düse somit außerhalb des Melkplatzes verbleibt, besteht auch keine oder höchstens eine deutlich geringere Gefahr, daß die zumindest eine Düse vom Nutztier verkotet wird.

Der erfindungsgemäße Gedanke beginnt bereits bei der Überlegung, daß der zuvor beschriebene Stand der Technik einen vermeidbar hohen technischen Aufwand zur Erreichung einer sicheren Dippbehandlung aufweist. Der erfindungsgemäße Gedanke setzt sich dann darin fort, daß eine ortsfeste Anordnung der zumindest einen Düse möglich ist und trotzdem eine sichere Dipppflege der Zitzen stattfinden kann. Um eine Verschmutzung der zumindest einen Düse zu verhindern, sollte diese mit Vorteil außerhalb der für das jeweilige Nutztier vorgesehenen Standfläche des Melkplatzes angeordnet sein. Eine in oder auf der Bodenfläche, oder eine zumindest bodennahe ortsfeste Anordnung der zumindest einen Düse ermöglicht eine von unten nach oben in den Melkstand hinein erfolgenden Ausstoß der Flüssigkeit, gegebenenfalls auch eine schräg nach oben gerichteter Ausstoß mittels der Düse. Da die erfindungsgemäß Lösung mit vergleichsweise geringem technischem Aufwand realisierbar ist, eignet sie sich auch im besonderen Maße, um bereits vorhandene Melkstände praktisch jeden Typs mit einer Euterzitzensprühanlage nachzurüsten.

In einer bevorzugten Ausführungsform der Erfindung kann die zumindest eine Düse ortsfest und außerhalb einer vorgesehenen Stand- oder Lauffläche eines Melkstands für das milchgebenden Tieres bodennah oder in einer Bodenfläche angeordnet sein. Insbesondere im Zusammenhang mit einem Karussellmelkstand kann in einer bevorzugten Weiterbildung dieser Ausführungsform der Erfindung, die zumindest eine Düse ortsfest an einem ortsfesten Gestell, Wandträger oder Konsole angeordnet sein. Die zumindest eine Düse kann sich hierbei an einem passiv auslenkbaren Arm des Gestells oder Konsole befinden. Das Gestell und die an ihm angeordnete zumindest eine Düse verbleiben ohne eine auf sie einwirkende äussere Belastung ortsfest. Die Relativbewegung zwischen der ortsfesten Düse und des sich zusammen mit dem Karussellmelkstand drehenden Melkgeschirrs birgt die Gefahr in sich, daß sich Kabel oder Schläuche des Melkgeschirrs des sich drehenden Melkplatzes und des zumindest einen Gestells oder Trägers mit der zumindest einen Düse miteinander in Kontakt geraten und dadurch das Gestell oder Teile davon mitgerissen werden können. Es kann deshalb zweckmässig sein, daß sich zumindest ein Teil des Gestells passiv, d.h. lediglich als Reaktion auf einen solchen Kontakt und ohne einen motorischen oder sonstigen aktiven Antrieb, auslenken läßt, um dadurch der Bewegung des kontaktierenden Melkgeschirrs zu folgen. Sobald das jeweilige Melkgeschirr sich am Gestell vorbeigedreht hat und der Kontakt sich wieder aufgelöst hat, kann der ausgelenkte Teil des Gestells ebenfalls wieder passiv in seine Ausgangsposition zurückschwenken. Hierdurch kann eine Beschädigung der zumindest einen Düse bzw der sie tragenden Konsole oder Gestells vermieden werden.

In einer bevorzugten Ausführungsform der Erfindung kann die zumindest eine Düse in Bezug auf eine Grundfläche und Längsrichtung des jeweiligen Melkplatzes außermittig angeordnet sein. Dies bedeutet, sie sollte sowohl in Längs- als auch als Querrichtung der Melkstandsgrundfläche jeweils zwar innerhalb einer imaginären Verlängerung des Melkplatzes aber dabei in etwa mit Abstand zu einer Mittellinie des Melkplatzes und damit außerhalb der Flächenbereiche angeordnet sein, die als Stand- und/oder Lauffläche mit Hufkontakt vorgesehen sind. Auch hierdurch können komplizierte und aufwendige Vorrichtungen vermieden werden, mit denen eine Düse erst zugeführt und nachfolgend wieder aus dem Melkplatz herausgeführt werden muß.

Im Zusammenhang mit einem Karussellmelkstand kann es vorteilhaft sein, daß lediglich an einer Stelle am Umfang des Karussells und mit zumindest geringem Abstand zu dem sich drehenden Umfang die zumindest eine Düse angeordnet ist. Mit der zumindest einen Düse kann jeweils dann ein Ausstoß erfolgen, wenn sich der jeweilige Melkstand in einer bestimmten relativen Rotationsposition in Bezug auf die zumindest eine Düse befindet. Es können hierzu Detektionsmittel vorgesehen sein, um die Rotationsposition der Melkplätze bestimmen zu können. Eine hierzu geeignete vorteilhafte Ausführungsform der Erfindung kann für und an jedem Melkplatz einen Teil einer Positionsdetektionseinrichtung und im Bereich der Düse einen weiteren Teil der Positionsdetektionseinrichtung vorsehen. So kann beispielsweise im Bereich der zumindest einen Düse ein Magnetdetektor und am Karussellmelkstand an und für jeden Melkplatz jeweils ein nur letzterem zugeordneter Magnet angeordnet sein. Befindet sich dann aufgrund der Rotationsbewegung des Melkkarussells einer der jeweiligen Magnete gegenüber dem Magnetdetektor, kann letzterer der Steuerung ein entsprechendes Detektionssignal bereitstellen und die Steuerung daraufhin einen Flüssigkeitsausstoß aus der zumindest einen Düse veranlassen. Hierzu kann beispielsweise ein Ventil für eine vorbestimmbare Zeit geöffnet und wieder geschlossen werden. Die zumindest eine Düse kann dann aufgrund des in der Flüssigkeit mittels der Pumpeinrichtung aufgebauten Flüssigkeitsdrucks eine Flüssigkeitsmenge in Richtung des entsprechenden Melkplatzes ausstoßen. Eine solche Lösung kann selbstverständlich auch mit einer Vielzahl anderer Detektionsmittel, die auf anderen physikalischen Eigenschaften als dem Magnetismus beruhen, realisiert sein.

Die Positionsdetektionseinrichtung kann auf beliebigen physikalischen Wirkprinzipien beruhen. So kann beispielsweise auch ein optischer Signalgeber sowie ein Signalempfänger im Bereich der Düse und ein Reflektor am jeweiligen Melkplatz angeordnet sein. Vom Signalgeber ausgesendetes Licht wird dann bei einer entsprechenden Rotationsposition des Karussells durch den Reflektor reflektiert und vom Signalempfänger aufgenommen, was ein entsprechendes Signal für die Steuerung und ein Flüssigkeitsausstoß auslöst. Die Rotationsposition kann auch beispielsweise an der Drehachse oder dem Antriebsmotor des Karussells ermittelt werden. Grundsätzlich ist es auch nicht erforderlich, daß die Positionsdetektionseinrichtung im Bereich der Düse und an dem Melkstand angeordnet ist, in den der Flüssigkeitsausstoß erfolgen soll. Prinzipiell können sich diese Elemente auch an anderen Stellen befinden und dann ein Versatz berücksichtigt werden.

In einer bevorzugten weiteren erfindungsgemäßen Ausführungsform kann zumindest eine Anwesenheitsdetektionseinrichtung vorgesehen sein, mit welcher die Anwesenheit eines Nutztiers im jeweiligen Melkstand festgestellt werden kann. Ist im überprüften Melkplatz ein Nutztier anwesend und wird dies mittels der Anwesenheitsdetektionseinrichtung festgestellt, so kann diese der Steuerung der Euterzitzensprühanlage ein entsprechendes Signal zur Verfügung stellen und die Steuerung daraufhin die Anlage für einen Flüssigkeitsausstoß freigeben. Bei anderen Melkständen, bei denen, anders als bei einem Karussellmelkstand, die einzelnen Melkplätze nicht an zumindest einer ortsfest angeordneten Düse vorbeibewegt werden, kann für jeden Melkplatz eine gesonderte Anwesenheitsdetektionseinrichtung vorgesehen sein. Ebenso kann vorgesehen sein, daß mehreren Melkplätzen eine gemeinsame Anwesenheitsdetektionseinrichtung zugeordnet ist und hierdurch mehrere Anwesenheitsdetektionseinrichtungen vorgesehen sind, wobei deren Anzahl aber geringer ist als die vorhandene Anzahl an Melkplätzen. Durch die zumindest eine Anwesenheitsdetektionseinrichtung kann sichergestellt werden, daß nur dann Flüssigkeitsausstöße stattfinden, wenn am entsprechenden Melkplatz auch tatsächlich ein Nutztier anwesend ist. Hierdurch können Dippflüssigkeit und damit auch Kosten eingespart werden. In bevorzugten Ausführungsformen der Erfindung, bei denen sowohl eine Positionsdetektionseinrichtung als auch eine Anwesenheitsdetektionseinrichtung vorgesehen sind, kann vorgesehen sein, daß die Steuerung nur dann einen Flüssigkeitsausstoß veranlaßt, wenn beide Detektionseinrichtungen entsprechende Freigabesignale an die Steuerung senden.

Besondere Vorteile ergeben sich aus einer weiteren bevorzugten Ausführungsform der Erfindung, die druckluftlose Ausstoßmittel aufweist, mit welchen durch Druckaufbau in einem Flüssigkeitsreservoir und mittels der zumindest einen Düse ein druckluftloser Ausstoßstrahl der Flüssigkeit aus der zumindest einen Düse heraus erzielbar ist. Diese bevorzugte erfindungsgemäße Lösung steht im Gegensatz zu vorbekannten Lösungen, bei denen Druckluft verwendet wird, um damit die Flüssigkeit als Aerosol auszustossen. Die bevorzugte erfindungsgemäße Lösung kann in vorteilhafter Weise die Verwendung von Druckluft vermeiden, was hinsichtlich Energieverbrauch und Installationsaufwand einer Euterzitzensprühanlage einen deutlich geringeren Aufwand mit sich bringt als bei der beschriebenen Lösung aus dem Stand der Technik. Bei der bevorzugten erfindungsgemäßen Ausführungsform kann der Druck im Flüssigkeitsreservoir beispielsweise mittels einer Pumpe, insbesondere einer elektrisch betriebenen Pumpe erzeugt werden.

Eine weitere vorteilhafte Lösung kann vorsehen, daß das Ausstoßmittel ein Ventil, insbesondere ein Magnetventil umfaßt, welches von der Steuerung der Euterzitzensprühanlage betätigbar ist, um einen Auslaß zur Düse hin entweder zu verschliessen oder freizugeben. Aufgrund des Überdrucks in der Flüssigkeit kann bei einer Freigabe Flüssigkeit zur Düse strömen und dort von der Düse zerstäubt werden. Als Düse kommt hierbei insbesondere und bevorzugt eine Einstoff-Druckdüse in Betracht. Im Zusammenhang mit der Erfindung können aber grundsätzlich auch andere Zerstäubertypen vorgesehen sein, beispielsweie Zweistoff- oder pneumatische Zerstäuber sowie mechanische Zerstäuber.

Um trotz eines möglichst weitestgehend automatisierten Melkvorgangs unnötige Anwendungsvorgänge der Euterzitzensprühanlage zu vermeiden, insbesondere weil sich kein Nutztier im Melkstand befindet, kann vorgesehen, daß für eine Ausführung eines durch eine Steuerung ausgelösten Anwendungsvorgang der Steuerung eine Information vorliegen muß, wonach sich im entsprechenden Melkstand ein Nutztier befindet. Erst dann kann nach dem Ende des Melkvorgangs ein automatisiert ausgelöster Anwendungsvorgang der Euterzitzensprühanlage erfolgen und von der Steuerung ausgelöst werden. Eine solche Information bezüglich einer Anwesenheit/Abwesenheit kann beispielsweise durch einen Anwesenheitssensor erreicht werden. Ein solches Detektionsmittel bzw ein solcher Anwesenheitssensor kann beispielsweise eine Lichtschranke, ein Infrarot-, Wärmesensor oder eine Ultraschallreflexionslichtschranke sein.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine Teildarstellung eines Karussellmelkstands mit einer darin integrierten bevorzugten Ausführungsform einer erfindungsgemäßen Euterzitzensprühanlage;
- Fig. 2: eine Teildarstellung eines Reihenmelkstands mit einer darin integrierten bevorzugten Ausführungsform einer Euterzitzensprühanlage;

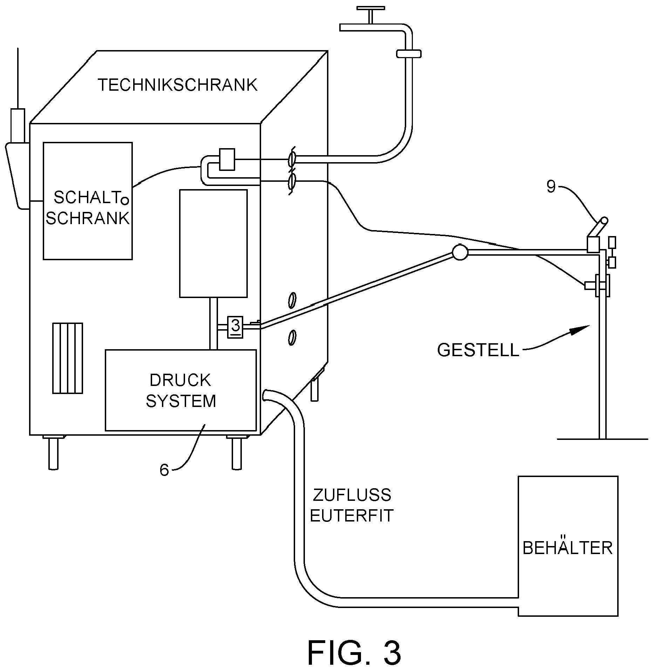

- Fig. 3: eine stark schematisierte Darstellung einer bevorzugten Ausführungsform des Drucksystems einer Euterzitzensprühanlage.

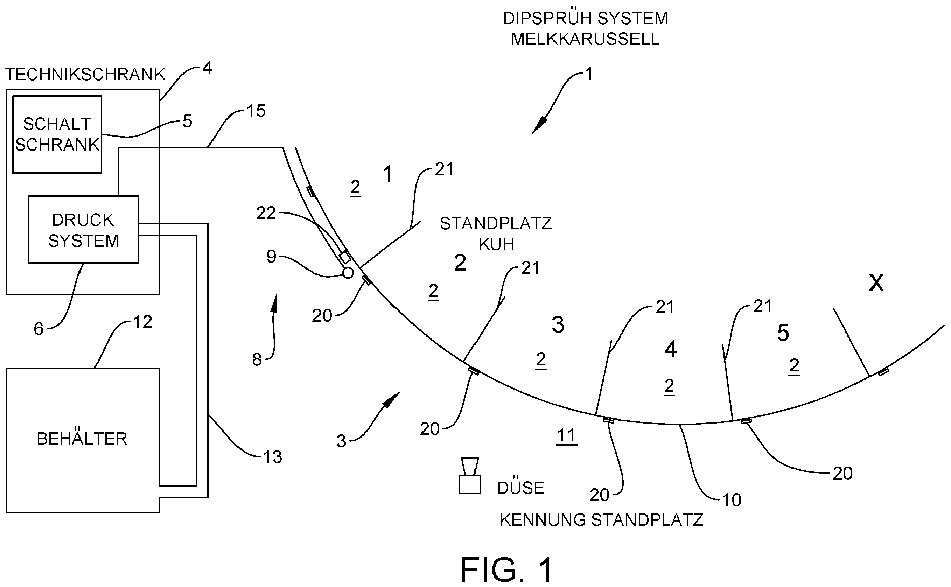

In Fig. 1 ist ein Teil eines Karussellmelkstands 1 angedeutet, der mehrere Standplätze und damit Melkplätze 2 für Milchkühe aufweist. Ein Melkstand mit mehreren Melkplätzen kann auch als Mehrfachmelkstand bezeichnet werden. Der Melkstand wäre in prinzipiell gleicher Weise auch für andere milchgebende Tiere, wie beispielsweise Ziegen oder Schafe, vorsehbar. Es kann sich hierbei um einen an sich bekannten Karussellmelkstand 1 handeln, wie er seit vielen Jahren bereits bekannt ist. Solche Karussellmelkstände 1 weisen im wesentlichen radial ausgerichtete Stand- oder Melkplätze 2 auf, in die jeweils eine Milchkuh für den Melkvorgang eintreten und nach dem Abschluß des Melkvorgangs wieder austreten kann. Hierbei kann vorgesehen sein, daß Milchkühe an einer bestimmten Umfangsposition des Karussellmelkstands 1 an einem Melkplatz 2 des Melkstands eintreten, der Karussellmelkstand sich weiterdreht und die nächste Milchkuh dann in den benachbarten Melkplatz 2 des Karussellmelkstand 1 gelangt. Dieser Vorgang kann wiederholt werden, bis sämtliche Melkplätze 2 besetzt sind. Im Melkstand wird der jeweiligen Milchkuh ein nicht weiter dargestelltes Melkgeschirr angelegt und die Milchkuh automatisiert gemolken, während sich das ring- oder scheibenförmige Melkstandskarussell 3 weiterdreht. Sobald der Melkvorgang abgeschlossen, das Melkgeschirr abgenommen ist und sich der Melkstand der jeweiligen Milchkuh an einer Austrittsposition befindet, kann die Milchkuh den Melkstand und ihren Melkplatz wieder verlassen.

Der Karussellmelkstand ist mit einem neben ihm aufgestellten Technikschrank 4 versehen, der die Steuerung in Form eines in den Technikschrank 4 integrierten Schaltschranks 5 sowie ein Drucksystem 6 umfaßt. Die im Technikschrank 4 angeordnete Steuerung kann unter anderem auch zur Steuerung der Melkanlage dienen. Die Steuerung kann zudem auch zur Steuerung einer erfindungsgemäßen Euterzitzensprühanlage 8 dienen, zu der nachfolgend eine bevorzugte Ausführungsform erörtert wird.

Die Euterzitzensprühanlage 8 weist für sämtliche Melkplätze 2 eine gemeinsame ortsfest angebrachte Düse 9 auf. Diese Düse 9 kann vorteilhafterweise außerhalb der Fläche der Melkplätze 2 angeordnet sein, auf bzw. in welchen sich die jeweiligen Milchkühe während des Melkvorgangs befinden. Die vorzugsweise nur eine Düse 9 kann zweckmäßigerweise Im Bereich des äußeren Umfangs 10 des drehbaren Melkstandkarussells 3 ortsfest angeordnet sein. Da die Melkplätze 2 solcher Karussellmelkstände 1 üblicherweise gegenüber einem Hallenboden, auf dem der Melkstand 1 angeordnet ist, erhöht sind, kann die Düse 9 beispielsweise an einem Gestell angeordnet sein, das auf dem Hallenboden 11 aufsteht und mit dem der Höhenunterschied zwischen dem Hallenboden und den Standflächen der Milchkühe in ihrem jeweiligen Melkstand 2 zumindest in etwa ausgeglichen wird. Die Höhenanordnung der Düse 9 kann dabei von der erreichbaren Höhe des mit der Düse erzeugbaren Sprühnebels abhängig sein. Die Düse 9 kann sich dadurch in etwa auf der gleichen Höhe wie die Standflächen der Melkplätze befinden, aber eventuell auch darunter oder darüber. In anderen Ausführungsformen könnte die Düse auch an anderen Bauteil angeordnet sein, beispielsweise einem feststehenden Bauteil des Melkstands selbst oder an einem an einer Wand befestigten Träger.

Das nicht näher dargestellte Gestell kann einen passiv auslenkbaren Arm aufweisen, an dessen freiem Ende sich die Düse 9 befindet. Der Arm kann - ausgehend von einer Sollposition - in Bezug auf die jeweilige Rotationsrichtung des Melkstands 1 auslenkbar sein, um beispielsweise aufgrund eines Kontakts mit Melkgeschirr des Melkstands eine Beschädigung der Düse 9 zu vermeiden. Sobald der Kontakt aufgrund der Auslenkung und des Drehvorgangs des Melkstands wieder aufgelöst ist, kann der Arm mit der Düse 9 wieder passiv und selbständig zurückschwenken. Diese ebenfalls passive Rückschwenkbewegung kann beispielsweise durch die Schwerkraft oder eventuell mittels einer zuvor durch die Auslenkbewegung passiv gespannten Rückholfeder realisiert sein. Vorzugsweise ist jedoch kein Antrieb vorgesehen, der extern, also nicht aus einer Bewegung des Melkstands resultierende, zugeführte Energie einsetzt.

Treten keine unbeabsichtigten Umständen ein, wie beispielsweise der bereits angesprochene mögliche Kontakt der Düse 9 oder ihrer Trageinrichtung mit einem aus dem Melkstand heraushängenden Schlauch oder Kabel, bleibt die Düse 9 sowohl vor, während als auch nach einem Ausstoßzyklus oder -vorgangs ortsfest angeordnet. Sie führt dann keine Relativbewegung zu den Standflächen der Melkplätze 2 aus. Letzteres erfolgt lediglich zur Vermeidung einer Beschädigung und dann auch nicht in den Melkstand 1 hinein, sondern sogar vom Melkstand 1 weg. Selbst bei dieser passiven Ausweichbewegung verbleibt die Düse stets außerhalb des Melkstands 1 und dessen Melkplätzen 2. Wie aus Fig. 1 ersichtlich ist, kann die Düse 9 mit möglichst geringem radialem Abstand zum Umfang des Melkkarussells angeordnet sein.

Wie aus Fig. 1 ebenfalls hervorgeht, weist die Euterzitzensprühanlage 8 auch einen Behälter 12 auf, in dem eine Anwendungsflüssigkeit enthalten ist. Die Anwendungsflüssigkeit für Euter kann eine an sich bekannte Dipp- oder Pflegeflüssigkeit für Euter und Zitzen sein. Vom Behälter 12 führt eine Leitung 13 zu einem Drucksystem 14, das beispielsweise im Technikschrank 4 angeordnet sein kann. Das Drucksystem 14 umfaßt unter anderem eine nicht näher dargestellte Pumpe. Von dieser aus verläuft eine Flüssigkeitsleitung 15 zur Düse 9 des Karussellmelkstands 1. Alleine mittels der Pumpe wird in der Dippflüssigkeit ein Überdruck erzeugt, also ein Flüssigkeitsdruck, dessen Betrag dem des Umgebungsdrucks übersteigt. Mit der gleichen Pumpe kann dieser vorbestimmte Überdruck, bezüglich des Umgebungsdrucks, ständig aufrechterhalten werden. Hierdurch steht an der Düse 9 ein Flüssigkeitsdruck an, der höher ist als der Umgebungsdruck. Der Betrag dieses Drucks kann variabel und einstellbar sein.

Zwischen der Pumpe und der zumindest einen Düse 9 ist jeweils ein von der Steuerung schaltbares Ventil angeordnet, welches einen Durchflußweg zum jeweiligen Ventil absperren oder freigeben kann. Das jeweilige Ventile kann hierzu mit einer elektrischen Leitung verbunden sein oder auf andere Weise Schaltsignale der Steuerung empfangen. Das zumindest eine Ventil kann beispielsweise als Magnetventil ausgebildet sein. Vorzugsweise ist das zumindest eine Ventil jeweils unmittelbar vor der dem jeweiligen Ventil zugeordneten Düse 9 angeordnet.

In Bezug auf eine Breitenrichtung des jeweiligen Melkplatzes 2 ist am Umfang 10 des jeweiligen Melkplatzes 2 ein Magnet 20 außermittig angebracht. Vorzugsweise befindet sich jeder dieser Magnete 20 nahe an einem Begrenzungsgitter 21 zum jeweils benachbarten Melkplatz. Benachbarte Magnete 20 haben dabei einen Abstand zueinander, welcher der Breite des jeweiligen Melkplatzes 2 im Bereich deren äußeren Umfangs entspricht. Jeder dieser Magnete 20 wirkt mit dem im Bereich der Düse 9 angeordnetem Magnetsensor 22 zusammen. Gelangt einer der Magnete 20 aufgrund der Rotationsbewegung des Melkstands 1 in eine Position direkt gegenüber den Magnetsensor 22, so detektiert der Magnetsensor 22 diese Rotationsposition des Melkstands 1 und sendet ein entsprechendes Detektionssignal an die Steuerung.

Die bevorzugte erfindungsgemäße Ausführungsform einer Euterzitzensprühanlage kann zudem ein weiteres Detektionsmittel aufweisen, mit welchem eine Anwesenheit einer Milchkuh am bzw im jeweiligen Melkplatz 2 festgestellt wird. Vorzugsweise überwacht ein solches Detektionsmittel eine bestimmte und vorzugsweise gleichbleibende Rotationsposition des Karussellmelkstands 1, vorzugsweise jene, an welcher sich auch der jeweilige Melkplatz befindet, in den ein Flüssigkeitsausstoß der Düse 9 erfolgen soll. Durch die Rotation des Karussellmelkstandes ändert sich kontinuierlich stets welcher Melkplatz 2 überwacht wird. Bei diesem Anwesenheitssensor kann es sich beispielsweise um einen Ultraschall- oder Infrarotsensor-Sensor handeln. Prinzipiell kann jede Art von Sensor eingesetzt werden, mit dem sich die An- oder Abwesenheit einer Milchkuh am Melkplatz feststellen lässt, beispielsweise auch Lichtschranken. Es ist zudem alternativ auch möglich, daß die Anwesenheitsinformation durch die Melkanlage zur Verfügung gestellt wird, nämlich ob das an der vorbestimmten Rotationsposition momentan befindliche Melkgeschirr in Betrieb ist oder nicht. Die bevorzugte Abfrage oder Detektion einer Anwesenheit einer Milchkuh am jeweils für den Flüssigkeitsausstoß vorgesehenen Melkplatz 2 kann unnötige Flüssigkeitsausstöße und damit Kosten und Euterpflegeflüssigkeit für die Fälle einsparen, in denen sich in den Melkplätzen, die sich an der Düse vorbeidrehen, keine Milchkühe befinden. Ist in einer Ausführungsform der Erfindung sowohl eine Positionsdetektionseinrichtung zur Feststellung einer Anordnung eines Melkplatzes 2 gegenüber der Düse sowie zusätzlich auch eine Anwesenheitsdetektionseinrichtung vorhanden, so sollte mit Vorteil von beiden Detektionseinrichtungen jeweils ein Detektionssignal vorliegen, damit die Steuerung einen Flüssigkeitsausstoß durch die Düse veranlaßt.

Als geeignete Düsen haben sich beispielsweise Vollkegeldüsen gezeigt. Diese haben den Vorteil, daß sie einen gerichteten etwa kegel- und/oder etwa zylinderförmigen Sprühnebel nach oben, oder je nach Ausrichtung der Düse auch nach schräg oben, erzeugen können. Je nach Ausführungsform oder Einstellung der Düse kann der Öffnungswinkel des um 360° erzeugten Sprühnebels unterschiedlich sein. Diese Düsen können einen gerichteten gleichmäßigen Sprühnebel erzeugen, so daß sämtliche Zitzen einer Milchkuh auch mittels der nur einen Düse 9 und nur des einen Flüssigkeitsausstosses vorzugsweise gleichzeitig benetzt werden können. Die Sprühnebelerzeugung erfolgt dabei lediglich aufgrund des in der Flüssigkeit vorhandenen Flüssigkeitsdrucks, der zu einer erforderlichen Fließgeschwindigkeit der Flüssigkeit durch die Düse hindurch führt, sowie aufgrund von durch die Düse ausgeübten Strömungsleitmaßnahmen.

Die bevorzugte erfindungsgemäße Ausführungsform der Euterzitzensprühanlage 8 kann in die Melkstandsanlage integriert sein. Die Integration kann insbesondere in einer Abstimmung der Steuerungen der automatisierten Melkanlage sowie der automatischen Euterzitzensprühanlage 8 sowie durch bauliche Anpassungen gegeben sein. So können beispielsweise Signale der Steuerung der Melkanlage von der Steuerung der Euterzitzensprühanlage bei der Bestimmung von Entscheidungen benutzt werden, ob und wann ein Flüssigkeitsausstoß erfolgt oder nicht. Die Melkstandsanlage kann die Euterzitzensprühanlage baulich ganz oder teilweise aufnehmen, beispielsweise können Teile wie Detektionseinrichtung, Düse oder Steuerung an der Melkstandsanlage angeordnet sein.

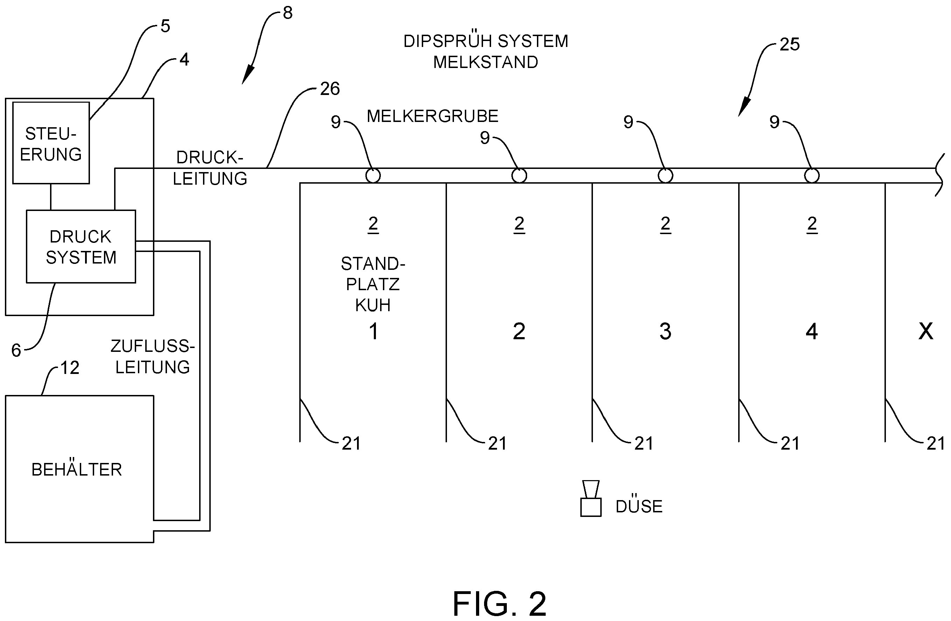

In Fig. 2 ist ein bevorzugtes Ausführungsbeispiel der Erfindung im Zusammenhang mit einem Reihenmelkstand 25 gezeigt, also einer Melkstandsanlage, bei welcher deren Melkplätze 2 parallel nebeneinander angeordnet sind. In der stark schematisierten Darstellung von Fig. 2 sind nur einige der bei der Melkstandsanlage 25 vorhandenen Melkplätze 2 angedeutet, die Melkstandsanlage kann deutlich mehr als die fünf dargestellten Melkplätze 2 aufweisen. Auch hier ist für jeden Melkplatz 2 ein nicht näher dargestelltes Melkgeschirr vorgesehen, das der im jeweiligen Melkstand befindlichen Milchkuh zum Melkvorgang angelegt und nach Abschluß des Melkvorgangs wieder abgenommen werden kann. Die Melkanlage wird von einer Steuerung überwacht und gesteuert. Im Unterschied zum Karussellmelkstand bewegt sich der Reihenmelkstand 25 nicht. Um zu ihrem Melkplatz zu gelangen, laufen die Milchkühe jeweils in ihren feststehenden Melkplatz 2 des Reihenmelkstands 25 hinein und verlassen diesen nachfolgend wieder. Während des Melkvorgangs sind die Kühe parallel nebeneinander angeordnet und jeweils mittels eines Begrenzungs- oder Absperrgitters 21 von der ihr benachbarten Milchkuh getrennt.

In die in Fig. 2 schematisch und teilweise dargestellte Reihenmelkstandsanlage 25 ist eine bevorzugte Ausführungsform einer erfindungsgemäßen Euterzitzensprühanlage 8 integriert. Letztere kann in prinzipiell identischer Weise wie die Euterzitzensprühanlage 8 aus Fig. 1 aufgebaut sein, wobei hier Anpassungen aufgrund des unterschiedlichen Aufbaus der Reihenmelkstandsanlage 25 vorgenommen sind. Nachfolgend wird deshalb vor allem auf die Unterschiede der beiden Ausführungsformen von erfindungsgemäßen Zitzensprühanlagen 8 eingegangen und soweit Gemeinsamkeiten bestehen diese übernommen, ohne sie nachfolgend im Detail erwähnen zu müssen.

Im Unterschied zur Melkstandsanlage aus Fig. 1 ist bei der Melkstandsanlage aus Fig. 2 für jeden Melkplatz 2 eine Düse 9 vorgesehen. Jede der mehreren Düsen 9 wird über eine gemeinsame Druckleitung 26 versorgt, in der mittels des Drucksystems 6, insbesondere einer Pumpe, ein Überdruck herrscht. Die Dippflüssigkeit wird hierbei von einem Behälter 12 aus mittels der Pumpe in die Druckleitung 26 gefördert und in dieser während des Betriebs der Melkanlage ein Überdruck möglichst aufrecht und konstant gehalten. Jede der Düsen 9 ist mit der Steuerung der Euterzitzensprühanlage 8 verbunden und kann von der Steuerung einzeln und damit separat von den anderen Düsen gesteuert werden. Die Ansteuerung der Düsen erfolgt vor allem durch Betätigung eines Ventils, beispielsweise eines Magnetventils, das vor jeder Düse 9 angeordnet ist und mit dem jeweils ein Öffnen eines Durchlasses zur Düse geöffnet und geschlossen werden kann, um insbesondere ein vorbestimmtes Flüssigkeitsvolumen aus der Düse 9 ausstoßen zu können. Bei dieser erfindungsgemäßen Ausführungsform der Erfindung kann es zweckmäßig sein, daß bei jedem Melkplatz 2 die ihr zugeordnete zumindest eine Düse 9 zwar außerhalb des jeweiligen Melkplatzes 2 aber bezüglich einer Breite des jeweiligen Melkplatzes mittig zum jeweiligen Melkplatz 2 angeordnet ist. Jeder der Düsen 9 befindet sich dabei an der Stirnseite des Melkplatzes 2, an welchem die jeweilige Milchkuh mit ihrer Hinterseite angeordnet ist. Die Düsen 9 können sich hierbei am Melkstand 25 selbst, aber außerhalb der Melkplätze 2 befinden. Die Düsen 9 können sich entweder in Höhe der Standflächen der Melkplätze 2 oder entweder demgegenüber leicht erhöht oder abgesenkt fix angeordnet sein. Alternativ hierzu können sie auch gesondert vom Melkstand befestigt sein. In jedem Fall ist es von Vorteil, wenn sie ortsfest derart angeordnet sind, daß sie in den ihr zugeordneten Melkplatz von unten nach schräg oben hineinspritzen können.

Da bei dieser Ausführungsform keine Rotationsbewegung des Melkgeschirrs relativ zur jeweiligen Düse 9 stattfindet, können auch Maßnahmen zur Vermeidung einer Beschädigung der jeweiligen Düse 9 vermieden werden, die aus einer solchen Relativbewegung möglicherweise resultieren.

Mangels einer Relativbewegung zwischen den Düsen und den Melkplätzen sind bei der Ausführungsform der Fig. 2 auch keine Positionsdetektionseinrichtungen von Melkplätzen erforderlich. Wie bei der Ausführungsform gemäß Fig. 1 ist auch nicht zwingend eine Anwesenheitsdetektionseinrichtung erforderlich. Es ist jedoch auch im Zusammenhang mit einer Reihenmelkstandsanlage 25 vorteilhaft, wenn für jeden Melkplatz eine Anwesenheitsdetektionseinrichtung vorgesehen ist, mit welcher eine Anwesenheit oder eine Abwesenheit einer Milchkuh am oder im jeweiligen Melkplatz detektierbar ist. Eine solche Anwesenheitsdetektionseinrichtung kann in prinzipiell gleicher Weise wie bei der Ausführungsform aus Fig. 1 ausgestaltet sein. Ebenso kann vorgesehen sein, daß nur bei Detektion einer Anwesenheit einer Milchkuh in einem der Melkplätze 2 von der Steuerung auch ein Flüssigkeitsausstoß nach Abschluß eines Melkvorgangs und vor einem Öffnen des Melkplatzes für einen Austritt der jeweiligen Milchkuh aus dem Melkplatz, veranlaßt wird.

Auch bei dieser bevorzugten erfindungsgemäßen Ausführungsform kann auf Druckluft zum Ausstoß von Flüssigkeit verzichtet werden. Der erforderliche Druck kann alleine durch eine Pumpe der Druckeinrichtung aufgebaut und erzeugt werden. Es ist im Zusammenhang mit der Erfindung jedoch nicht ausgeschlossen sondern auch möglich, Druckluft zum Ausstoß der Dippflüssigkeit anzuwenden und einzusetzen.

Bei der in Fig. 1 gezeigten Ausführungsform eines Karussellmelkstands handelt es sich um einen sogenannten Außenmelker, was bedeutet, daß sich die Tiere in ihrer Melkposition im jeweiligen Melkplatz mit ihrer Rückseite in der Nähe des äußeren Umfangs des Karussellmelkstands befinden und kopfseitig zur Karussellmitte weisen. Üblicherweise werden den Milchkühen von der äußeren Umfangsseite aus die Melkgeschirre an die Euter angehängt. In einer nicht zeichnerisch dargestellten weiteren bevorzugten Ausführungsform der Erfindung kann der Karussellmelkstand auch als sogenannter Innenmelker ausgebildet sein. In einem solchen sind die Milchkühe - oder andere milchgebenden Nutztiere - mit ihrer Hinter- bzw Rückseite zur Mitte diese Karussellmelkstand weisend und kopfseitig zum äußeren Umfang des Melkstand weisend angeordnet. Wie beim Außenmelker sind die Tiere auch beim Innenmelker in etwa radial ausgerichtet. Beim Innenmelker ist ein Mittenbereich des Karussellmelkstand begehbar. Dieser Bereich wird genutzt, um den Tieren von hier aus das Melkgeschirr anzulegen und es nach dem Melkvorgang auch wieder abzunehmen.

Bei der bevorzugten Lösung für einen Innenmelker kann die zumindest eine Düse im Bereich des inneren Umfangs der ringförmig aneinander gereihten Melkplätze angeordnet sein. Hierdurch kann sie, wie beim zuvor beschriebenen Außenmelker, von außerhalb der Melkplätze in die Melkplätze hinein das Euter der jeweiligen Milchkuh von hinten mit einer Dipp- bzw Pflegeflüssigkeit erreichen. Soweit erforderlich, kann auch hier die zumindest eine Düse auf einem Gestell oder einer Konsole angeordnet, sein, um für die Düse eine ausreichende Höhe zu erreichen, damit der von unten nach oben, bzw schräg oben, in den Melkplatz hinein gerichtete Flüssigkeitssprühnebel auch das Euter erreicht. Selbstverständlich kann auch bei dieser wie bei anderen Ausführungsformen der Erfindung jede andere denkbare Möglichkeit vorgesehen sein, um die Düse in einer hierfür ausreichenden Höhe anzuordnen. Auch hier kann eine Positionsdetektionseinrichtung zur Bestimmung einer vorgesehenen Rotationsposition eines Melkplatzes für einen Sprühausstoß sowie vorzugsweise ergänzend und optional auch eine Anwesenheitsdetektionseinrichtung zur Bestimmung der Anwesenheit einer Milchkuh im jeweils zum Sprühausstoß vorgesehenen sein. Beide Detektionseinrichtungen können hierbei wie jene der Ausführungsform aus Fig. 1 ausgebildet sein. Bei einer magnetischen Detektionseinrichtungen können die Magnete am inneren Umfang des ringförmigen Karussellmelkplatz angeordnet sein. Auch die Bauart der zumindest einen Düse, das Drucksystem sowie die Steuerung können jeweils jenen aus Fig. 1 entsprechen.

**Bezugszeichenliste**

| | | | |
|---|---|---|---|
| 1 | Karussellmelkstand | 21 | Begrenzungsgitter |
| 2 | Melkplatz | 22 | Magnetsensor |
| 3 | Melkstandskarussell | 23 | |
| 4 | Technikschrank | 25 | Reihenmelkstand |
| 5 | Schaltschrank | 26 | Druckleitung |
| 6 | Drucksystem | | |
| 8 | Euterzitzensprühanlage | | |
| 9 | Düse | | |
| 10 | äußerer Umfang | | |
| 11 | Hallenboden | | |
| 12 | Behälter | | |
| 13 | Leitung | | |
| 15 | Flüssigkeitsleitung | | |
| 20 | Magnet | | |

## Patentansprüche

1. Euterzitzensprühanlage eines Mehrfachmelkstands zur berührungslosen Aufbringung einer Flüssigkeit, insbesondere einer Behandlungsflüssigkeit, auf zumindest eine Euterzitze eines milchgebenden Tieres, das sich auf einem Melkplatz eines Mehrfachmelkstands befindet, wobei die Euterzitzensprühanlage mit zumindest einem eine Düse umfassenden Ausstoßmittel versehen ist, mit welchen die Flüssigkeit gerichtet ausgestoßen wird, und die Zitzensprühanlage ferner mit einer Steuerung, zum Auslösen eines Flüssigkeitsaustoßes, versehen ist,
**gekennzeichnet, durch** eine Pumpeinrichtung zur Erzeugung eines im Bereich der Düse wirksamen Ausstoßdrucks in der Flüssigkeit, sowie dadurch, daß die zumindest eine Düse zumindest während des durch eine Steuerung ausgelösten Sprühvorgang außerhalb des Melkplatzes angeordnet ist, in welchen die Düse für den Ausstoß gerichtet ist.

2. Euterzitzensprühanlage nach Anspruch 1, **dadurch gekennzeichnet, daß** die zumindest eine Düse ortsfest und außerhalb einer vorgesehenen Stand- oder Lauffläche eines Melkstands für das milchgebenden Tieres bodennah oder in einer Bodenfläche angeordnet ist, insbesondere derart, daß die zumindest eine Düse eine Sprührichtung in den Melkstand hinein und mit zumindest einer Komponente nach vertikal oben aufweist.

3. Euterzitzensprühanlage nach zumindest einem der vorhergehenden Ansprüche, **gekennzeichnet durch** zumindest ein Detektionsmittel zur Erkennung einer Anwesenheit eines milchgebenden Tieres in einem Melkstand, insbesondere in einem Melkplatz eines Mehrfachmelkstands.

4. Euterzitzensprühanlage nach zumindest einem der vorhergehenden Ansprüche, **gekennzeichnet durch** ein druckluftlos arbeitendes Ausstoßmittel, mit welchen durch Druckaufbau in der Flüssigkeit und mittels der zumindest einen Düse ein druckluftloser Ausstoßstrahl der Flüssigkeit aus der zumindest einen Düse heraus erzielbar ist.

5. Euterzitzensprühanlage nach zumindest einem der vorhergehenden Ansprüche, **dadurch gekennzeichnet, daß** das Ausstoßmittel ein Ventil, insbesondere ein Magnetventil, umfaßt, welches von einer Steuerung der Zitzensprühanlage betätigbar ist.

6. Euterzitzensprühanlage nach zumindest einem der vorhergehenden Ansprüche, **gekennzeichnet durch** Detektionsmittel zur Erkennung einer Rotationsposition eines Melkplatzes eines als Karussellmelkstand ausgebildeten Mehrfachmelkstands.

7. Euterzitzensprühanlage nach zumindest einem der vorhergenden Ansprüche, **gekennzeichnet durch** eine Steuerung der Euterzitzensprühanlage, welche in Abhängigkeit eines Detektionsergebnisses eines Detektionsmittels zur Erkennung einer Anwesenheit eines milchgebenden Tieres an einem Melkplatzes und/oder eines Detektionsergebnisses eines Detektionsmittels zur Erkennung einer Rotationsposition eines Melkplatzes eines Karussellmelkstands den Sprühvorgang auslöst.

8. Melkstandsanlage zum Melken von milchgebenden Huftieren, welcher mit zumindest einem Melkplatz für eines der Huftiere versehen ist, der zumindest eine Melkplatz mittels Begrenzungsmittel zur Positionierung des Huftiers während eines Melkvorgangs abgrenzbar ist, mit einer Melkeinrichtung versehen ist, deren Melkzeug an Euterzitzen anfügbar und abnehmbar ist und mit einer Zitzensprühanlage zur berührungslosen Aufbringung einer Flüssigkeit auf zumindest eine der Euterzitzen versehen ist, **gekennzeichnet, durch** eine gemäß Anspruch 1 ausgebildete Euterzitzensprühanlage,

9. Melkstandsanlage nach Anspruch 8, **dadurch gekennzeichnet, daß** sie als Melkkarussell oder als Reihenmelkstand ausgebildet ist.

10. Verfahren zur berührungslosen automatisierten Aufbringung einer Flüssigkeit, insbesondere einer Behandlungs- und oder Desinfektionsflüssigkeit, auf zumindest eine Euterzitze eines milchgebenden Tieres, das sich in einem Melkstand befindet, bei welchem mit zumindest einer Düse eines Ausstoßmittel die Flüssigkeit gerichtet ausgestoßen wird, damit mittels eines geschalteten Absperrmittels durch die Düse Flüssigkeit ausstoßbar ist, **dadurch gekennzeichnet, daß**
mittels einer Pumpeinrichtung in der Flüssigkeit ein im Bereich der Düse wirksamer Überdruck, bezogen auf den Umgebungsdruck, in der Flüssigkeit erzeugt und aufrecht erhalten wird, der in einem Ausstoßverfahrensschritt als Ausstoßdruck zum Ausstoß von Flüssigkeit aus der dabei außerhalb des Melkplatzes angeordneten Düse genutzt wird, wobei in diesem Ausstoßverfahrensschritt die Flüssigkeit mittels der Düse von außerhalb des einen Melkplatzes in den Melkplatz hineingespritzt wird.

11. Verfahren nach Anspruch 10, **dadurch gekennzeichnet, daß** die Flüssigkeit mittels der zumindest einen ortsfest und außerhalb einer vorgesehenen Stand- oder Lauffläche eines Melkstands für das milchgebenden Tieres ortsfest und bodennah oder in einer Bodenfläche angeordneten Düse ausgestoßen wird.
